# EUROPEAN PATENT APPLICATION

(11) **EP 4 674 907 A1**
(43) Date of publication of application: **07.01.2026**
(21) Application number: 25187122.4
(22) Date of filing: 03.07.2025
(51) Int. Cl.: C08K 5/42, C08K 5/521, C08L 69/00

(54) **RESIN COMPOSITION AND RESIN MOLDED ARTICLE**

(30) Priority: 04.07.2024 JP 2024108235
(71) Applicant: Konica Minolta, Inc., Tokyo 100-7015 (JP)
(72) Inventor: KOGA, Hirofumi, Tokyo, 100-7015 (JP); NAGAI, Yuuki, Tokyo, 100-7015 (JP); IKEDA, Hayate, Tokyo, 100-7015 (JP); UEMURA, Naoko, Tokyo, 100-7015 (JP); SAITA, Yasuharu, Tokyo, 100-7015 (JP)
(74) Representative: MFG Patentanwälte Meyer-Wildhagen Meggle-Freund Gerhard PartG mbB

(57) **Abstract**

An object of the present invention is to provide a resin composition having satisfactory flame retardancy and fluidity. The resin composition includes a polycarbonate resin, a organic sulfonic acid metal salt, and a phosphate ester, and a ratio of a z-average molecular weight of the polycarbonate resin to a weight average molecular weight of the polycarbonate resin is 1.7 or more.

## Description

### Technical Field

The present invention relates to a resin composition and a resin molded article.

### Background Art

A resin composition containing a polycarbonate resin has excellent mechanical properties and excellent thermal properties, and thus is used in the automobile field, the OA equipment field, the electrical and electronic fields, and the like. In addition, resin compositions are strongly required to have high flame retardancy in order to be used for OA equipment, home appliances, and the like. Usually, a halogen compound is mainly used as a flame retardant for a resin composition that contains a polycarbonate resin. A resin composition containing a halogen compound as a flame retardant exhibits relatively high flame retardancy, but may cause environmental pollution at the time of fire occurrence or incineration treatment, and is highly likely to become a problem from the viewpoint of recycling in the future.

In recent years, from the viewpoint of environmental protection, a reduction in the amount of waste of resin molded articles has been required. Therefore, as raw materials for new products, recycled materials such as wastes from manufacturing processes and used recovered products are used (see, for example, PTLs 1 and 2).

PTL 1 describes a polycarbonate resin composition containing a polycarbonate resin, a condensed phosphate ester-based flame retardant, a graft copolymer, and a fluoropolymer. Further, PTL 1 describes that the polycarbonate resin may be a recycled material.

PTL 2 describes a flame-retardant resin composition containing an aromatic polycarbonate resin, a phosphate ester-based flame retardant, and an organic sulfonic acid-based flame retardant. In addition, PTL 2 describes that an aromatic polycarbonate resin may be a recycled material.

### Citation List

### Patent Literature

PTL 1
   Japanese Unexamined Patent Publication No. 2022-93366
PTL 2
   Japanese Unexamined Patent Publication No. 2015-218181

### Summary of Invention

### Technical Problem

As in the polycarbonate resin composition described in PTL 1 and the flame-retardant resin composition described in PTL 2, by utilizing recycled materials for new products, it is possible to reduce new input of resources and to reduce energy for crude oil mining and production of resin products from crude oil. However, when a recycled material is used for the purpose of environmental protection, there are problems such as deterioration of physical property such as fluidity deteriorate and/or deterioration of flame retardancy due to a decrease in molecular weight caused by deterioration and impurities remaining in the recycled material. In particular, in a resin composition containing a polycarbonate resin, a reduction in the molecular weight reduces the melt tension of the resin, thereby degrading the moldability, and the resin may drip even during combustion.

An object of the present invention is to provide a resin composition having satisfactory flame retardancy and fluidity and a resin molded article.

### Solution to Problem

A resin composition according to an embodiment of the present invention includes a polycarbonate resin, an organic sulfonic acid metal salt, and a phosphate ester. The ratio of a z-average molecular weight of the polycarbonate resin to a weight average molecular weight of the polycarbonate resin is 1.7 or more.

The resin molded article according to one embodiment of the present invention is obtained by molding the resin composition of the present invention.

### Description of Embodiments

Hereinafter, a resin composition and a resin molded article according to an embodiment of the present invention are not limited to the following embodiment. Note that in the present specification, a numerical range indicated by using "to or -" means a range including numerical values described before and after "to or -" as a lower limit value and an upper limit value, respectively. In the following description, the resin composition is described, and then the method for producing a resin molded article and the resin molded article are described.

### [Configuration of resin composition]

The resin composition of the present embodiment contains a polycarbonate resin, an organic sulfonic acid metal salt, and a phosphate ester.

The polycarbonate resin is a polymer whose basic structure has a carbonate bond represented by -[-O-X-O-C (= O)-]-. Note that the above-described X is a hydrocarbon group, but a heteroatom or a hetero bond may be introduced thereto.

The type of the polycarbonate resin is not particularly limited, but includes a polycarbonate polymer obtained by reacting a dihydroxy compound with a carbonate precursor. At this time, in addition to the dihydroxy compound and the carbonate precursor, a polyhydroxy compound or the like may be reacted, or carbon dioxide may be reacted as a carbonate precursor with the cyclic ether. The polycarbonate resin may be a homopolymer composed of one type of repeating unit, or a copolymer having two or more types of repeating units. The copolymer may be a random copolymer or a block copolymer.

The polycarbonate resin may be linear or branched, or may include any of a linear polycarbonate resin and a branched polycarbonate resin. The polycarbonate resin preferably includes a branched polycarbonate resin. When the polycarbonate resin includes a branched polycarbonate resin, decomposition of the polycarbonate resin is accelerated by the organic sulfonic acid metal salt in a crosslinked portion, and formation of a carbonized layer progresses, thereby improving flame retardancy. In the present embodiment, the polycarbonate resin is linear, or includes linear and branched polycarbonate resins.

Among monomers as raw materials of the aromatic polycarbonate resin, examples of the aromatic dihydroxy compounds include the following compounds: dihydroxybenzenes such as 1,2-dihydroxybenzene, 1,3-dihydroxybenzene, and 1,4-dihydroxybenzene; dihydroxybiphenyls such as 2,5-dihydroxybiphenyl, 2,2'-dihydroxybiphenyl, and 4,4'-dihydroxybiphenyl; dihydroxynaphthalenes such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene; dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy) benzene, and 1,3-bis(4-hydroxyphenoxy) benzene; bis(hydroxyaryl) alkanes such as 2,2-bis(4-hydroxyphenyl) propane, 1,1-bis(4-hydroxyphenyl) propane, 2,2-bis(3-methyl-4-hydroxyphenyl) propane, 2,2-bis(3-methoxy-4-hydroxyphenyl) propane, 2-(4-hydroxyphenyl)-2-(3-methoxy-4-hydroxyphenyl) propane, 1,1-bis(3-tert-butyl-4-hydroxyphenyl) propane, 2,2-bis(3,5-dimethyl-4-hydroxyphenyl) propane, 2,2-bis(3-cyclohexyl-4-hydroxyphenyl) propane, 2-(4-hydroxyphenyl)-2-(3-cyclohexyl-4-hydroxyphenyl) propane, α,α'-bis(4-hydroxyphenyl)-1,4-diisopropylbenzene, 1,3-bis [2-(4-hydroxyphenyl)-2-propyl] benzene, bis(4-hydroxyphenyl) methane, bis(4-hydroxyphenyl) cyclohexylmethane, bis(4-hydroxyphenyl) phenylmethane, bis(4-hydroxyphenyl) (4-propenylphenyl) methane, bis(4-hydroxyphenyl) diphenylmethane, bis(4-hydroxyphenyl) naphthylmethane, 1,1-bis(4-hydroxyphenyl) ethane, 1,1-bis(4-hydroxyphenyl)-1-phenylethane, 1,1-bis(4-hydroxyphenyl)-1-naphthylethane, 1,1-bis(4-hydroxyphenyl) butane, 2,2-bis(4-hydroxyphenyl) butane, 2,2-bis(4-hydroxyphenyl) ,pentane 1,1-bis(4-hydroxyphenyl) hexane, 2,2-bis(4-hydroxyphenyl) hexane, 1,1-bis(4-hydroxyphenyl) octane, 2,2-bis(4-hydroxyphenyl) octane, 1,1-bis(4-hydroxyphenyl) hexane, 2,2-bis(4-hydroxyphenyl) hexane, 4,4-bis(4-hydroxyphenyl) heptane, 2,2-bis(4-hydroxyphenyl) nonane, 1,1-bis(4-hydroxyphenyl) decane, and 1,1-bis(4-hydroxyphenyl) dodecane; bis(hydroxyaryl) cycloalkanes such as 1,1-bis(4-hydroxyphenyl) cyclopentane, 1,1-bis(4-hydroxyphenyl) cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-3-tert-butyl-cyclohexane, 1,1-bis(4-hydroxyphenyl)-3-phenylcyclohexane and 1,1-bis(4-hydroxyphenyl)-4-phenylcyclohexane; cardo structure-containing bisphenols such as 9,9-bis(4-hydroxyphenyl) fluorene and 9,9-bis(4-hydroxy-3-methylphenyl) fluorene; dihydroxydiaryl sulfides such as 4,4'-dihydroxydiphenyl sulfide and 4,4'-dihydroxy-3, 3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; and dihydroxydiaryl sulfones such as 4,4'-dihydroxydiphenyl sulfone and 4,4'-dihydroxy-3,3'-dimethyldiphenyl sulfone.

Examples of monomers serving as raw materials for aliphatic polycarbonate resins include alkanediols such as ethane-1,2-diol, propane-1,2-diol, propane-1,3-diol, 2,2-dimethylpropane-1,3-diol, 2-methyl-2-propylpropane-1,3-diol, butane-1,4-diol, pentane-1,5-diol, hexane-1,6-diol, and decane-1, 10-diol; cycloalkanediols such as cyclopentane-1,2-diol, cyclohexane-1,2-diol, cyclohexane-1,4-diol, 1,4-cyclohexanedimethanol, 4-(2-hydroxyethyl) cyclohexanol, 2,2,4,4-tetramethyl-cyclobutane-1,3-diol; glycols such as ethylene glycol, 2,2'-oxydiethanol, triethylene glycol, propylene glycol, and spiroglycol; aralkyldiols such as 1,2-benzenedimethanol, 1,3-benzenedimethanol, 1,4-benzenedimethanol, 1,4-benzenediethanol, 1,3-bis(2-hydroxyethoxy) benzene, 1,4-bis(2-hydroxyethoxy) benzene, 2,3-bis(hydroxymethyl) naphthalene, 1,6-bis(hydroxyethoxy) naphthalene, 4,4'-biphenyldimethanol, 4,4'-biphenyldiethanol, 1,4-bis(2-hydroxyethoxy) **biphenyl,** bisphenol-A bis(2-hydroxyethyl) ether, and bisphenol-S bis(2-hydroxyethyl) ether; and cyclic ethers such as 1,2-epoxyethane, 1,2-epoxypropane, 1,2-epoxycyclopentane, 1,2-epoxycyclohexane, 1,4-epoxycyclohexane, 1-methyl-1,2-epoxycyclohexane, 2,3-epoxynorbornane, and 1,3-epoxypropane.

Among the monomers serving as raw materials of the aromatic polycarbonate resin, examples of carbonate precursors include carbonyl halides and carbonate esters.

Each monomer may be used alone or in combination of a plurality of types thereof. These monomers may be used in any combination or in any ratio.

Examples of the carbonyl halides include phosgene; and haloformates such as bischloroformates of dihydroxy compounds and monochloroformates of dihydroxy compounds.

Examples of carbonate esters include diaryl carbonates such as diphenyl carbonate and ditolyl carbonate; dialkyl carbonates such as dimethyl carbonate and diethyl carbonate; biscarbonates of dihydroxy compounds, monocarbonates of dihydroxy compounds, and carbonates of dihydroxy compounds such as cyclic carbonates.

The z-average molecular weight (Mz) relative to the weight average molecular weight (Mw) of the polycarbonate resin is 1.7 or more, preferably 2.2 or less, and particularly preferably 1.8 or more and 2.2 or less. When the ratio of the z-average molecular weight (Mz) to the weight average molecular weight (Mw) is 1.7 or more, it means that the molecular weight distribution is broad in the higher molecular weight side. When the ratio of the z-average molecular weight (Mz) relative to the weight average molecular weight (Mw) is less than 1.7, the fluidity of the polycarbonate resin decreases, and the dispersibility of the organic sulfonic acid metal salt in the resin composition decreases.

The method for adjusting the z-average molecular weight (Mz) to the weight average molecular weight (Mw) to 1.7 or more is not particularly limited. An example of a method for adjusting the ratio of the z-average molecular weight (Mz) to the weight average molecular weight (Mw) to 1.7 or more is a method of mixing a plurality of types of polycarbonate resin having different sizes in a predetermined ratio.

The weight average molecular weight (Mw) and the z-average molecular weight (Mz) in the resin composition can be measured by gel permeation chromatography (GPC). To be specific, 5 mg of the resin composition and 10 g of tetrahydrofuran are dissolved in a glass bottle to obtain a sample. Next, the Mw and Mz of the sample are measured with an HLC-8420GPC (Tosoh Corp.), and the Mz/Mw is calculated.

The ratio of the z-average molecular weight (Mz) of the polycarbonate resin to the number average molecular weight (Mn) of the polycarbonate resin is preferably 3.0 or more and 4.0 or less, particularly preferably 3.2 or more and 3.8 or less. When the ratio of the z-average molecular weight (Mz) to the number average molecular weight (Mn) is 3.0 or more, it means that the molecular weight distribution is broad in the of smaller molecular weight side. When the ratio of the z-average molecular weight (Mz) to the number average molecular weight (Mn) is less than 3.0, the ratio of low molecular weight polycarbonate resin becomes low, making it difficult to form a carbonized layer. Thus, satisfactory flame retardancy might not be achieved.

There is no particular limitation on the method for adjusting the ratio of z-average molecular weight (Mz) of the polycarbonate resin to the number average molecular weight (Mn) of the polycarbonate resin to 3.0 or more. Examples of the method for adjusting the ratio of the z-average molecular weight (Mz) to the number average molecular weight (Mn) to 3.0 or more include a method of mixing a plurality of types of polycarbonate resin having different sizes in a predetermined ratio.

The number average molecular weight (Mn) and the z-average molecular weight (Mz) of the resin composition can be measured by gel permeation chromatography (GPC). The z-average molecular weight (Mz) can be measured by the above-described method. For the measurement of the number average molecular weight (Mn), 5 mg of a sample (resin composition) was weighed and put into THF_5mL, and then ultrasound was applied for 30 minutes, and the dissolved portion was used for the measurement with a GPC apparatus. For the number average molecular weight (Mn), the weight average molecular weight (Mw), and the z-average molecular weight (Mz) in terms of polystyrene, an HLC-8320GPC apparatus (Tosoh Corp.) was used as a GPC apparatus. As the columns, TSK guard column Super MP (HZ)-M × 1 was used as a guard column, TSKgel Super Multipore HZ -M × 2 was used as a main column, and THF (tetrahydrofuran) for chromatograph manufactured by Wako Pure Chemical Industries, Ltd. was used as an eluent. As experimental conditions, the flow rate was 0.35 ml/min, the sample injection amount was 10 µl, the measurement temperature was 40°C, and an RI + UV detector was used. The calibration curve was prepared from 10 samples of A-500, F-1, F-10, F-80, F-380, A-2500, F-4, F-40, F-128, and F-700 of "polystylene Standard Sample TSK standard" (Tosoh Corp.). The data collection interval in the sample analysis was set to 300 ms.

As described above, the molecular weight distribution of the polycarbonate resin is preferably broad. The broad molecular weight distribution of the polycarbonate resin is also advantageous in that a recycled material described later is used.

An organic sulfonic acid metal salt is a flame retardant. The inclusion of the organic sulfonic acid metal salt in the resin composition promotes the formation of a char layer (carbonized layer) during combustion and improves the stability of the flame retardancy of the resin composition (shortens the combustion time). It is considered that the char layer generated at the time of combustion is firmly formed by the organic sulfonic acid metal salt, and the supply of oxygen required for continuous combustion can be blocked by blocking oxygen in the outside world. In addition, the organic sulfonic acid metal salt serves as a catalyst to promote decomposition of the polycarbonate resin. At this time, carbon dioxide (nonflammable gas) is generated to suppress combustion, and at the same time, air bubbles are generated in the polycarbonate resin to suppress the conduction of combustion heat.

Examples of the organic sulfonic acid metal salt include metal salts of dodecylbenzenesulfonic acid, dodecylsulfonic acid, stearic acid sulfonic acid, dialkylsulfosuccinic acid, polyoxyethylene polycyclic phenyl ether sulfate, and alkyldiphenyl ether disulfonic acid. Examples of the metal of the organic sulfonic acid metal salt include alkali metals such as sodium, lithium, potassium, rubidium and cesium; magnesiums such as beryllium and magnesium; and alkaline earth metals such as calcium, strontium and barium. The organic sulfonic acid metal salt may be used alone or in combination of a plurality of types thereof.

The content of the organic sulfonic acid metal salt is preferably in a range of 0.2 to 1.0% by mass, more preferably in a range of 0.2 to 0.5% by mass. When the content of the organic sulfonic acid metal salt is less than 0.2% by mass, there is a risk that the decomposition of the polycarbonate resin cannot be promoted. When the content of the organic sulfonic acid metal salt is more than 1.0 % by mass, the decomposition of the polycarbonate resin is excessively promoted, so that the flame retardancy may be lowered.

The content of the organic sulfonic acid metal salt in the resin composition can be quantified by IR and elemental analysis.

A phosphate ester is a flame retardant. The phosphate ester is preferably a compound represented by the following general formula (1). 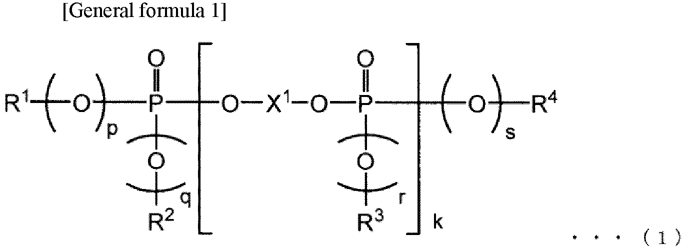 (In the formula, R¹, R², R³ and R⁴ each represent an alkyl group having 1 to 6 carbon atoms or an aryl group having 6 to 20 carbon atoms which may be substituted with an alkyl group, p, q, r and s each represent 0 or 1, k represents an integer of 1 to 5, and X¹ represents an arylene group.)

The compound represented by the general formula (1) may be a mixture of compounds in which k is a different number. In the case of compounds in which k is different, k is an average value of a mixture thereof. In the case of a mixture of compounds having different k numbers, the value (average value) of k is preferably in the range of 1 to 2, more preferably in the range of 1 to 1.5, particularly preferably in the range of 1 to 1.2, and further preferably in the range of 1 to 1.15.

X¹ Represents a divalent arylene group. Examples of X¹ include divalent groups derived from dihydroxycompounds such as resorcinol, hydrochinone, bisphenol A, 2,2'-dihydroxybiphenyl, 2,3'-dihydroxybiphenyl, **2,4'-dihydroxybiphenyl, 3,3'-dihydroxybiphenyl, 3,4'-dihydroxybiphenyl, 4,4'-dihydroxybiphenyl,** 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,6-dihydroxynaphthalene and 2,7-dihydroxynaphthalene. Of these, a divalent group derived from resorcinol, bisphenol A or 3,3'-dihydroxybiphenyl is particularly preferred.

In general formula (1), p, q, r, and s each represent 0 or 1, and 1 is preferable. In addition, R¹, R², R³ and R⁴ each represent an alkyl group having 1 to 6 carbon atoms or an aryl group having 6 to 20 carbon atoms which may be substituted with an alkyl group. Examples of the aryl group include a phenyl group, a cresyl group, a xylyl group, an isopropylphenyl group, a butylphenyl group, a tert-butylphenyl group, a di-tert-butylphenyl group and a p-cumylphenyl group.

Examples of the phosphate ester represented by the general formula (1) include phenylresorcin polyphosphate, cresyl resorcin polyphosphate, phenyl cresyl resorcin polyphosphate, xylyl resorcin polyphosphate, phenyl-p-t-butylphenyl resorcin polyphosphate, phenyl isopropylphenyl resorcin polyphosphate, cresyl xylyl resorcin polyphosphate, and phenyl isopropylphenyl diisopropylphenyl resorcin polyphosphate.

The phosphate ester may be used alone or in combination of the plurality of types thereof. The content of the phosphate ester is in a range of 1.0 to 10.0% by mass, and more preferably in a range of 3.0 to 8.0% by mass. When the content of the phosphate ester is less than 1.0% by mass, the carbonized layer may not be formed. When the content of the phosphate ester is more than 10.0% by mass, plasticization of the resin composition proceeds, which may result in a reduction in impact strength and may cause dripping during combustion.

The content of the phosphate ester in the resin composition can be quantified by known IR and elemental analysis.

The resin composition may include a recycled material. The recycled material may be a polycarbonate resin or another resin. Examples of other resins include polyethylene (PE), polypropylene (PP), polystyrene (PS), acrylonitrile-butadiene-styrene copolymer (ABS resin), acrylonitrile-styrene resin (AS resin), polyethylene terephthalate (PET), and polybutylene terephthalate (PBT).

The recycled material may be used alone or in combination of a plurality of types thereof. The content of the recycled material is preferably within a range of 70 to 95% by mass.

The resin composition may include, in addition to the above-described components, an additive such as a colorant, a lubricant, a compatibilizer, an antioxidant, an anti-drip agent, and an ultraviolet absorber. These additives may be used alone or in combination of two or more thereof.

Examples of the colorant include inorganic pigments and organic pigments. Examples of the lubricant include metal salts of higher fatty acids and higher fatty acid amides. Examples of the compatibilizer include random copolymer-based, graft copolymer-based, and block polymer-based compatibilizers. Examples of the antioxidant include hindered phenol-based, sulfur-containing organic compound-based, and phosphorus-containing organic compound-based antioxidants. Examples of the ultraviolet absorber include benzotriazole-based, benzophenone-based, and salicylate-based ultraviolet absorbers.

The content of the additive is preferably 0.3% by mass or more, and more preferably 0.5% by mass or more, from the viewpoint of exhibiting the effect of adding the additive. On the other hand, the content of the additive is preferably 20% by mass or less, more preferably 15% by mass or less from the viewpoint of not affecting melt-kneading.

### [Method for producing resin molded article]

The resin molded article using the above-described resin composition can be produced, for example, by the following method. The method for producing a resin molded article includes a step of obtaining a kneaded material and a step of obtaining a resin molded article by injection molding the kneaded material.

In the step of obtaining a kneaded material, a polycarbonate resin, an organic sulfonic acid metal salt, and a phosphate ester are kneaded at a predetermined temperature to obtain a kneaded material. Note that recycled materials and other additives may be added as necessary. The ratio of the z-average molecular weight to the weight average molecular weight of the polycarbonate resin is 1.7 or more.

The kneading temperature is not particularly limited as long as it is a temperature at which the resin composition is melted. The kneading temperature is appropriately set according to the resin composition. The kneading temperature is a temperature equal to or higher than the melting point. The kneading temperature is preferably within a range of 200 to 260°C.

The kneading time is not particularly limited as long as the resin composition is melted.

The order of kneading is not particularly limited. The polycarbonate resin, the organic sulfonic acid metal salt, the phosphate ester may be charged at the same time and kneaded, or the polycarbonate resin may be melted and then the organic sulfonic acid metal salt, and the phosphate ester may be added.

In the step of obtaining a resin molded article, the resin molded article is obtained using the kneaded material. To be specific, for example, the resin composition is poured into a heated mold and cured. Finally, the resin molded article is obtained by mold release.

### [Resin molded article]

The resin molded article of the present embodiment is obtained by molding the above-described resin composition. The shape of the resin molded article is not particularly limited. The shape of the resin molded article is appropriately set according to the intended use. Examples of the resin molded article include exterior materials of office equipment and interior materials of automobiles.

### [Mechanism of action]

Next, the reason why the resin composition and the resin molded article according to the present embodiment exhibit satisfactory flame retardancy and satisfactory fluidity is presumed as follows. A resin composition containing an organic sulfonic acid and a phosphate ester is known to have flame retardancy. A resin composition containing only an organic sulfonic acid metal salt alone exhibits flame retardancy by forming a carbonized layer as the polycarbonate resin decomposes. Since a resin composition containing only an organic sulfonic acid metal salt has a high decomposition temperature, it is difficult to achieve flame retardancy at the V-1 level of the UL94. However, a resin composition further containing a large amount of a phosphate ester can achieve flame retardancy of UL94 V-1 level and satisfactory fluidity. In the present embodiment, when the ratio of the z-average molecular weight (Mz) to the weight average molecular weight (Mw) is 1.7 or more, the organic sulfonic acid metal salt can be favorably dispersed in the resin composition. In addition, it is considered that the addition of a phosphate ester to the resin composition further promotes the dispersion of the organic sulfonic acid metal salt in the resin composition, decreases the decomposition temperature of the resin, and promotes the formation of a carbonized layer, thereby improving the flame retardancy. It is also considered that setting the ratio of the z-average molecular weight (Mz) of the polycarbonate resin to the number average molecular weight (Mn) of the polycarbonate resin to 3.0 or more further promotes the dispersion of the organic sulfonic acid metal salt in the resin composition, promotes the formation of a carbonized layer, and contributes to the improvement of the flame retardancy.

### [Effects]

As described above, in the resin composition and resin molded article according to the present embodiment, the ratio of the z-average molecular weight to the weight average molecular weight in the polycarbonate resin is 1.7 or more, and therefore the flame retardancy and fluidity become satisfactory.

### Examples

Hereinafter, the present invention will be specifically described with reference to Examples, but the present invention is not limited thereto.

### 1. Preparation of resin molded article

### Example 1

In a twin-screw kneader TEX-25 (The Japan Steel Works, Ltd.), 100% by mass of resin A (recycled polycarbonate resin derived from CDs and DVDs) (Mw 32,000), which is polycarbonate resin, 0.3% by mass of KSS-FR (arichem. LCC), which is an organic sulfonic acid metal salt, 4.0% by mass of PX200 (Daihachi Chemical Industry Co., Ltd.), which is a phosphate ester, 0.3% by mass of Polyflon FA500H (Daikin Industries, Ltd.), which is an anti-drip agent, and 0.2% by mass of Irganox 1010 (BASF Japan Ltd.), which is a hindered phenol-based antioxidant, were kneaded at a kneading temperature of 200°C and a rotation speed of 200 rpm. The kneaded material was pre-dried at 80°C for 4 hours, and then, the kneaded material was molded at a temperature of 220°C using an injection-molding machine JSW AD110 (Japan Steel Works, Ltd) to obtain a resin-molded article 1 of Example 1.

### Examples 2 to 6 and Comparative examples 1 to 3

Resin molded articles 2 to 9 of Examples 2 to 6 and Comparative examples 1 to 3 were produced in the same manner as the resin composition 1 of Example 1 except that the composition of each molded article was changed as illustrated in the following Table 1.

Regarding the polycarbonate resins in Table 1, a recycled polycarbonate resin (Mw 40000) derived from household electric appliances were used as the resin B, a recycled polycarbonate resin (Mw 46000) derived from water bottles were used as the resin C, and a resin derived from CDs and a recycled polycarbonate resin derived from water bottles were used as the resin D. NOVAREX (registered trademark) 7025R (Mitsubishi Engineering Plastics Corporation) and NOVAREX 7027I (Mitsubishi Engineering Plastics Corporation) were used. NOVAREX (registered trademark) 7025R and NOVAREX 7027I are virgin materials, the resin A and the resin C are recovered materials, and the resin B is a base material that has been melt-kneaded to reduce its molecular weight.

The composition of each resin molded article is listed in Table 1.

**[Table 1]**

| Classification | Resin molded article No. | PC resin | | | Molecular weight distribution | | Flame retardant | | Others | |
|---|---|---|---|---|---|---|---|---|---|---|
| | | Resin type | Linear type (% by mass) | Branched type (% by mass) | Mz/Mw | Mz/Mw | Organic sulfonic acid metal salt (% by mass) | Phosphate ester (% by mass) | Drip inhibitor (% by mass) | Antioxidant (% by mass) |
| Example 1 | Resin molded article 1 | resin A | 100 | - | 2.2 | 3.9 | 0.3 | 4 | 0.3 | 0.2 |
| Example 2 | Resin molded article 2 | Resin B | 90 | 10 | 2.0 | 3.6 | 0.3 | 4 | 0.3 | 0.2 |
| Example 3 | Resin molded article 3 | Resin A | 100 | - | 2.2 | 3.9 | 0.1 | 4 | 0.3 | 0.2 |
| Example 4 | Resin molded article 4 | Resin C | 70 | 30 | 1.7 | 3.1 | 0.2 | 10 | 0.4 | 0.2 |
| Example 5 | Resin molded article 5 | Resin C | 70 | 30 | 1.7 | 3.1 | 0.3 | 0.8 | 0.2 | 0.2 |
| Example 6 | Resin molded article 6 | 7025R | 100 | - | 1.7 | 2.9 | 0.3 | 4 | 0.3 | 0.2 |
| Comparative example 1 | Resin molded article 7 | 7027I | 100 | - | 1.5 | 2.8 | 0.3 | 4 | 0.3 | 0.2 |
| Comparative example 2 | Resin molded article 8 | Resin A | 100 | - | 2.2 | 3.9 | - | 8 | 0.3 | 0.2 |
| Comparative example 3 | Resin molded article 8 | Resin D | 90 | 10 | 1.7 | 3.0 | 0.3 | - | 0.3 | 0.2 |

### 2. Evaluation of flame retardancy

The flame retardancy was evaluated by performing UL94V test. To be specific, each resin composition was dried at 80°C for 4 hours, and then an injection-molding machine, J55ELII (Japan Steel Works, Ltd), was used to mold to obtain a strip-shaped test piece of the 125 mm × 13 mm × 1.6 mm at a cylinder temperature of 280°C and a mold temperature of 80°C. The molded test piece (test piece for UL test) was moisture-conditioned in a thermostatic chamber at 23°C and 50% RH for 48 hours, and subjected to a UL94 test (combustion test of plastic materials for parts of equipment) defined by Underwriters Laboratories (UL) in the United States. The UL94V is a method for evaluating flame retardancy from an afterflame time or dripping properties after a flame of a burner is applied to a vertically held test piece having a predetermined size for 10 seconds. Then, each test piece was determined as V-0, V-1, V-2, or not-V based on its combustion behavior.

### 3. Combustion time evaluation

The combustion time was evaluated by measuring the afterflame time after contacting the five rectangular test pieces obtained in [2. Evaluation of flame retardancy] with a flame, and then adding up the total afterflame time of the five pieces. The evaluation criterion are as follows, and the cases of "∘" and "Δ" in the following evaluation criterion were regarded as passing.
∘: less than 30 seconds
△: 30 seconds or more but less than 60 seconds
×: 60 seconds or more

### 4. Evaluation of fluidity

The fluidity was evaluated as follows. The resin composition was dried at 80°C for 4 hours, and then an injection molder "ROBOSHOT_S-2000i 50BP" (FANUC) was used to evaluate the fluidity length using an Archimedes spiral flow test piece (channel thickness 2 mm, channel width 10 mm) according to the company's own evaluation criteria below. The conditions were an injection speed of 60 mm/s, a cylinder temperature of 280°C, a mold temperature of 80°C, and an injection pressure of 860 MPa. The larger the flow length, the better the fluidity. The evaluation criterion were as follows, and the cases of "∘" and "△" in the following evaluation criterion were regarded as passing.
∘: 350 mm or more
△: 250 mm or more and less than 350 mm
×: less than 250mm

### 5. Impact strength evaluation

For the evaluation of impact strength, the resin composition was dried at 80°C for 4 hours, and then an injection molding machine J55ELII (manufactured by Japan Steel Works, Ltd.) was used to mold to obtain a strip-shaped test piece of 100 mm x 10 mm x 4 mm at a cylinder temperature of 260°C and a mold temperature of 40°C, and an Izod impact test was performed in accordance with "JIS-K7110-1998". The evaluation criterion are as follows, and the cases of "∘" and "△" in the following evaluation criterion were regarded as passing.
∘: 32 kJ/m² or more
△: 6 kJ/m² or more and less than 32 kJ/m²
×: less than 6 kJ/m²

### 6. Evaluation of bending strength

The bending strength was evaluated in accordance with ISO 178 by conditioning, at 23°C ± 2°C and 50% ± 5% RH for at least 48 hours, a test piece (multipurpose test piece) molded by injection molding, and then measuring the flexural modulus using a TENSILON (A&D, RTI1310) with a support distance of 64 mm and a test speed of 2 mm/min. The measurement result is an average value of three measurements. The evaluation criterion are as follows, and the cases of "∘" and "△" in the following evaluation criterion were regarded as passing.
∘: 2300 MPa or more
△: 2100 or more and less than 2300 MPa
×: less than 2100MPa

The evaluation results are shown in Table 2.

**[Table 2]**

| Classification | Resin molded article No. | Evaluation | | | | |
|---|---|---|---|---|---|---|
| | | Flame retardancy | Fluidity | Combustion time | Bending strength | Impact strength |
| Example 1 | Resin molded article 1 | V-0 | ○ | ○ | ○ | ○ |
| Example 2 | Resin molded article 2 | V-0 | ○ | ○ | ○ | ○ |
| Example 3 | Resin molded article 3 | V-1 | ○ | ○ | ○ | ○ |
| Example 4 | Resin molded article 4 | V-0 | ○ | ○ | ○ | △ |
| Example 5 | Resin molded article 5 | V-1 | ○ | ○ | ○ | ○ |
| Example 6 | Resin molded article 6 | V-0 | △ | ○ | ○ | ○ |
| Comparative example 1 | Resin molded article 7 | not-V | × | × | ○ | ○ |
| Comparative example 2 | Resin molded article 8 | not-V | ○ | ○ | ○ | × |
| Comparative example 3 | Resin molded article 8 | not-V | × | × | ○ | ○ |

### 7. Evaluation

As shown in Tables 1 and 2, in Examples 1 to 6 in which the ratio of the z-average molecular weight of a polycarbonate resin to the weight average molecular weight of the polycarbonate resin was 1.7 or more, the flame retardancy and fluidity were satisfactory. In Example 1, 2, and 5, the bending strength was also satisfactory. It is considered to be because the flame retardants, that is, an organic sulfonic acid metal salt and a phosphate ester, were within the preferred range. Furthermore, the impact strength was slightly lower in Example 4 in which the amount of phosphate ester was large and plasticization of the polycarbonate resin proceeded, compared with Examples 1 to 3, 5, and 6.

On the other hand, in Comparative example 1 in which the ratio of the z-average molecular weight of a polycarbonate resin to the weight average molecular weight of the polycarbonate resin was less than 1.7, the flame retardancy and the fluidity were poor.
The flame retardancy and the impact strength were unsatisfactory in Comparative example 2 containing no organic sulfonic acid metal salt. This is considered to be because the organic sulfonic acid metal salt, namely a flame retardant, was not contained, and thus a char layer (carbonized layer) was not formed at the time of combustion.

The fluidity was also unsatisfactory in Comparative example 3 in which no phosphate ester was contained. This is considered to be because the organic sulfonic acid metal salt, namely a flame retardant, is not contained.

### Industrial Applicability

According to the resin composition and the resin molded article according to the present invention, reuse of a recovered material, expansion of effective utilization of a resin material, and further reduction of a load on the environment are expected.

## Claims

1. A resin composition, comprising:
a polycarbonate resin; an organic sulfonic acid metal salt; and a phosphate ester, wherein
a ratio of a z-average molecular weight of the polycarbonate resin to a weight average molecular weight of the polycarbonate resin is 1.7 or more.

2. The resin composition according to claim 1, wherein the ratio of the z-average molecular weight of the polycarbonate resin to a number average molecular weight of the polycarbonate resin is 3.0 or more.

3. The resin composition according to claim 1, wherein a content of the organic sulfonic acid metal salt is in a range of 0.2 to 1.0% by mass.

4. The resin composition according to claim 1, wherein a content of the phosphate ester is in a range of 1.0 to 10.0% by mass.

5. The resin composition according to claim 1, wherein the polycarbonate resin includes a linear or branched polycarbonate resin.

6. The resin composition according to claim 1, wherein the polycarbonate resin includes a recycled material.

7. A resin molded article obtained by molding the resin composition according to any one of claims 1 to 6.
